# EUROPEAN PATENT APPLICATION

(11) **EP 3 667 565 A1**
(43) Date of publication of application: **17.06.2020**
(21) Application number: 19214331.1
(22) Date of filing: 09.12.2019
(51) Int. Cl.: G06K 9/62, B29C 64/393, B33Y 50/02

(54) **METHOD FOR MELT POOL MONITORING USING MACHINE LEARNING**

(30) Priority: 13.12.2018 US 201816219594
(71) Applicant: General Electric Company, Schenectady, NY 12345 (US)
(72) Inventor: Spears, Thomas Graham, Springdale, OH 45246 (US)
(74) Representative: Hafner & Kohl PartmbB

(57) **Abstract**

A method of controlling an additive manufacturing process in which a directed energy source (24) is used to selectively melt material to form a workpiece, forming a melt pool (52) in the process of melting. The method includes: using an imaging apparatus to generate an image (72) of the melt pool (52) comprising an array of individual image elements (74), the image (72) including a measurement of at least one physical property for each of the individual image elements (74); using a software machine learning algorithm to classify each image (72) as acceptable or unacceptable; and controlling at least one aspect of the additive manufacturing process with reference to the image classification.

## Description

### BACKGROUND OF THE INVENTION

This invention relates generally to additive manufacturing and related processes, and more particularly to apparatus and methods for melt pool monitoring and process control in additive manufacturing.

Additive manufacturing is a process in which material is built up layer-by-layer to form a component. Additive manufacturing is limited primarily by the position resolution of the machine and not limited by requirements for providing draft angles, avoiding overhangs, etc. as required by casting. Additive manufacturing is also referred to by terms such as "layered manufacturing," "reverse machining," "direct metal laser melting" (DMLM), and "3-D printing". Such terms are treated as synonyms for purposes of the present invention.

One type of additive manufacturing machine is referred to as a "powder bed" machine and includes a build chamber that encloses a mass of powder which is selectively fused by a laser to form a workpiece.

One problem with prior art additive manufacturing machines is that they operate in an open loop environment and cannot report back to an operator the stability of the process being applied. The systems in place to determine health of the process occur in quality steps after the build has finished. When issues are caught there can be work in progress that is scrapped due to machine issues that were undetected till the ex post facto quality system could catch them.

### BRIEF DESCRIPTION OF THE INVENTION

This problem is addressed by a method of imaging a melt pool during a manufacturing process and extracting image classification of the melt pool.

According to one aspect of the technology described herein, a method is provided for controlling an additive manufacturing process in which a directed energy source is used to selectively melt material to form a workpiece, forming a melt pool in the process of melting. The method includes: using an imaging apparatus to generate an image of the melt pool comprising an array of individual image elements, the image including a measurement of at least one physical property for each of the individual image elements; using a software machine learning algorithm to classify each image as acceptable or unacceptable; and controlling at least one aspect of the additive manufacturing process with reference to the image classification.

According to another aspect of the technology described herein, a method is provided for making a workpiece, including: depositing a material in a build chamber; directing a build beam from a directed energy source to selectively fuse the material in a pattern corresponding to a cross-sectional layer of the workpiece, wherein a melt pool is formed by the directed energy source; using an imaging apparatus to generate an image of the melt pool comprising an array of individual image elements, the image including a measurement of at least one physical property for each of the individual image elements; using a software machine learning algorithm to classify each image as acceptable or unacceptable; and controlling at least one aspect of making the workpiece with reference to the image classification.

### BRIEF DESCRIPTION OF THE DRAWINGS

The invention may be best understood by reference to the following description taken in conjunction with the accompanying drawing figures in which:
FIG. 1 is a schematic, partially-sectioned front elevation view of an exemplary additive manufacturing machine;
FIG. 2 is a schematic, partially-sectioned side elevation view of the machine of FIG. 1;
FIG. 3 is a schematic top plan view graphic of an image of a powder bed including a melt pool;
FIG. 4 is an enlarged view of a portion of a melt pool image;
FIG. 5 is a schematic top plan view of an image of a known acceptable melt pool; and
FIG. 6 is a schematic flow charge of a deep learning algorithm.

### DETAILED DESCRIPTION OF THE INVENTION

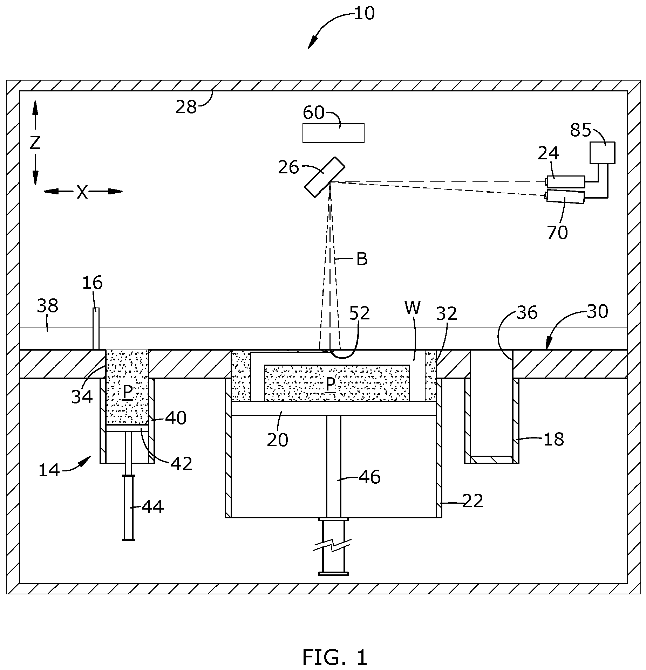

Referring to the drawings wherein identical reference numerals denote the same elements throughout the various views, FIG. 1 illustrates schematically an additive manufacturing machine 10 suitable for carrying out an additive manufacturing method. The machine 10 and its operation are as representative example of a "powder bed machine".

It will be understood that the machine 10 is merely used as an example to provide context for describing the principles of the present invention. The principles described herein are applicable to other configurations of powder bed machines, as well as to other types of additive manufacturing machines and related processes. More generally, the principles described herein would be applicable to any manufacturing process in which a melt pool is generated. Nonlimiting examples of such processes include electron-beam melting ("EBM"), directed energy deposition ("DED"), and laser welding. The term "manufacturing process" could also encompass repair processes where components are built up or joined together using a technique that generates a melt pool.

Basic components of the machine 10 include a table 12, a powder supply 14, a recoater 16, an overflow container 18, a build platform 20 surrounded by a build chamber 22, a directed energy source 24, and a beam steering apparatus 26, all surrounded by a housing 28. Each of these components will be described in more detail below.

The table 12 is a rigid structure defining a planar worksurface 30. The worksurface 30 is coplanar with and defines a virtual workplane. In the illustrated example it includes a build opening 32 communicating with the build chamber 22 and exposing the build platform 20, a supply opening 34 communicating with the powder supply 14, and an overflow opening 36 communicating with the overflow container 18.

The recoater 16 is a rigid, laterally-elongated structure that lies on the worksurface 30. It is connected to an actuator 38 operable to selectively move the recoater 16 along the worksurface 30. The actuator 38 is depicted schematically in FIG. 1, with the understanding devices such as pneumatic or hydraulic cylinders, ballscrew or linear electric actuators, and so forth, may be used for this purpose.

The powder supply 14 comprises a supply container 40 underlying and communicating with the supply opening 34, and an elevator 42. The elevator 42 is a plate-like structure that is vertically slidable within the supply container 40. It is connected to an actuator 44 operable to selectively move the elevator 42 up or down. The actuator 44 is depicted schematically in FIG. 1, with the understanding that devices such as pneumatic or hydraulic cylinders, ballscrew or linear electric actuators, and so forth, may be used for this purpose. When the elevator 42 is lowered, a supply of powder "P" of a desired composition (for example, metallic, ceramic, and/or organic powder) may be loaded into the supply container 40. When the elevator 42 is raised, it exposes the powder P above the worksurface 30. Other types of powder supplies may be used; for example, powder may be dropped into the build chamber 22 by an overhead device (not shown).

The build platform 20 is a plate-like structure that is vertically slidable below the build opening 32. It is connected to an actuator 46 operable to selectively move the build platform 20 up or down. The actuator 46 is depicted schematically in FIG. 1, with the understanding that devices such as pneumatic or hydraulic cylinders, ballscrew or linear electric actuators, and so forth, may be used for this purpose. When the build platform 20 is lowered into the build chamber 22 during a build process, the build chamber 22 and the build platform 20 collectively surround and support a mass of powder P along with any components being built. This mass of powder is generally referred to as a "powder bed", and this specific category of additive manufacturing process may be referred to as a "powder bed process".

The overflow container 18 underlies and communicates with the overflow opening 36, and serves as a repository for excess powder P.

The directed energy source 24 may comprise any device operable to generate a beam of suitable power and other operating characteristics to melt and fuse the powder P during the build process, described in more detail below. For example, the directed energy source 24 may be a laser. Other directed-energy sources such as electron beam guns are suitable alternatives to a laser.

The beam steering apparatus 26 may include one or more mirrors, prisms, and/or lenses and provided with suitable actuators, and arranged so that a beam "B" from the directed energy source 24 can be focused to a desired spot size and steered to a desired position in plane coincident with the worksurface 30. For purposes of convenient description, this plane may be referred to as a X-Y plane, and a direction perpendicular to the X-Y plane is denoted as a Z-direction (X, Y, and Z being three mutually perpendicular directions). The beam B may be referred to herein as a "build beam".

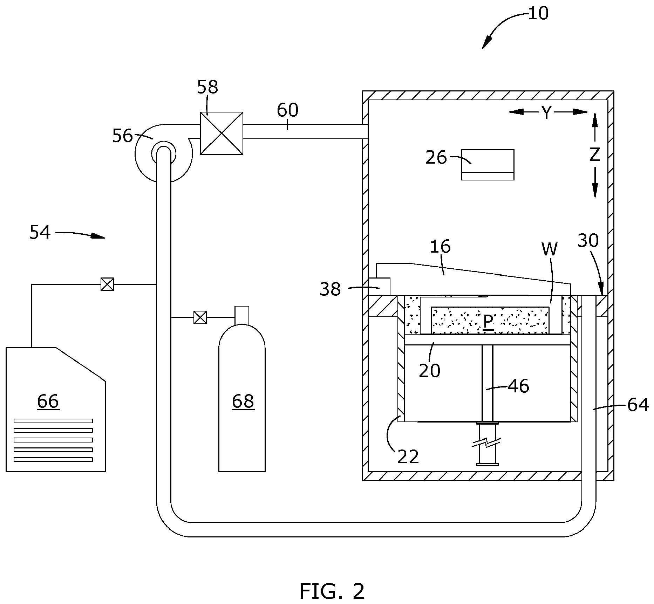

The housing 28 serves to isolate and protect the other components of the machine 10. During the build process described above, the housing 28 is provided with a flow of an appropriate shielding gas which, among other functions, excludes oxygen from the build environment. To provide this flow the machine 10 may be coupled to a gas flow apparatus 54, seen in FIG. 2. The exemplary gas flow apparatus 54 includes, in serial fluid flow communication, a variable-speed fan 56, a filter 58, an inlet duct 60 communicating with the housing 28, and a return duct 64 communicating with the housing 28. All of the components of the gas flow apparatus 54 are interconnected with suitable ducting and define a gas flow circuit in combination with the housing 28.

The composition of the gas used may similar to that used as shielding gas for conventional welding operations. For example, gases such as nitrogen, argon, or mixtures thereof may be used. Any convenient source of gas may be used. For example, if the gas is nitrogen, a conventional nitrogen generator 66 may be connected to the gas flow apparatus 54. Alternatively, the gas could be supplied using one or more pressurized cylinders 68.

An exemplary basic build process for a workpiece W using the apparatus described above is as follows. The build platform 20 is moved to an initial high position. The build platform 20 is lowered below the worksurface 30 by a selected layer increment. The layer increment affects the speed of the additive manufacturing process and the resolution of the workpiece W. As an example, the layer increment may be about 10 to 50 micrometers (0.0003 to 0.002 in.). Powder "P" is then deposited over the build platform 20 for example, the elevator 42 of the supply container 40 may be raised to push powder through the supply opening 34, exposing it above the worksurface 30. The recoater 16 is moved across the worksurface to spread the raised powder P horizontally over the build platform 20. Any excess powder P drops through the overflow opening 36 into the overflow container 18 as the recoater 16 passes from left to right. Subsequently, the recoater 16 may be moved back to a starting position. The leveled powder P may be referred to as a "build layer" and the exposed upper surface thereof may be referred to as a "build surface".

The directed energy source 24 is used to melt a two-dimensional cross-section or layer of the workpiece W being built. The directed energy source 24 emits a beam "B" and the beam steering apparatus 26 is used to steer a focal spot of the build beam B over the exposed powder surface in an appropriate pattern. A small portion of exposed layer of the powder P surrounding the focal spot, referred to herein as a "melt pool" 52 is heated by the build beam B to a temperature allowing it to sinter or melt, flow, and consolidate. As an example, the melt pool 52 may be on the order of 100 micrometers (0.004 in.) wide. This step may be referred to as fusing the powder P.

The build platform 20 is moved vertically downward by the layer increment, and another layer of powder P is applied in a similar thickness. The directed energy source 24 again emits a build beam B and the beam steering apparatus 26 is used to steer the focal spot of the build beam B over the exposed powder surface in an appropriate pattern. The exposed layer of the powder P is heated by the build beam B to a temperature allowing it to sinter or melt, flow, and consolidate both within the top layer and with the lower, previously-solidified layer.

This cycle of moving the build platform 20, applying powder P, and then directed energy fusing the powder P is repeated until the entire workpiece W is complete.

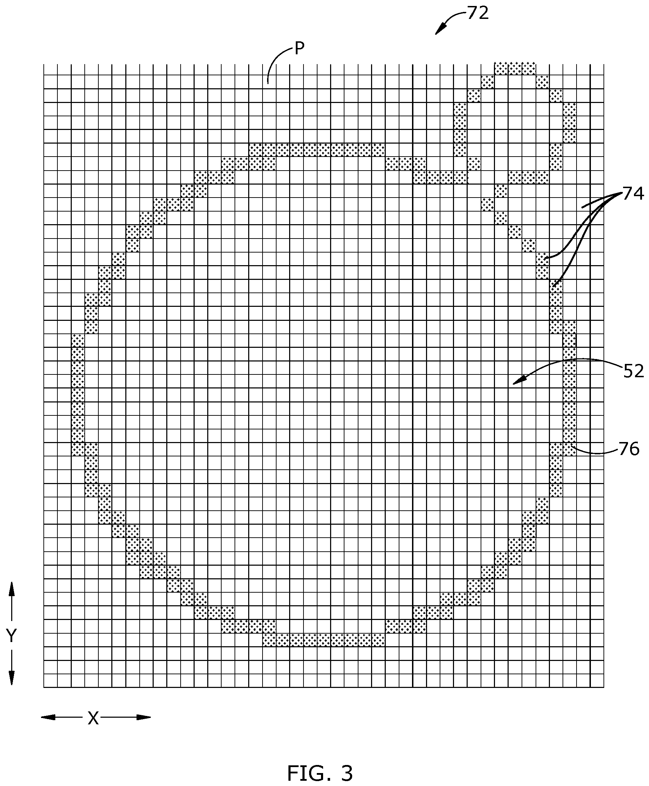

The additive manufacturing machine 10 is provided with an imaging apparatus 70 which is operable to produce a digital image of the melt pool 52 comprising an array of individual image elements, i.e., pixels for a 2-D array or voxels for a 3-D array. An example of such an image 72 is shown in FIG. 3, with image elements 74. The imaging apparatus 70 is operable to produce, for each image element, a measurement of at least one physical property. The measurement may include at least one scalar value such as brightness, intensity, frequency, temperature, or Z-height. Alternatively, the imaging apparatus 70 may produce a signal representative of multiple factors, for example RGB color values. The imaging apparatus 70 is also operable to produce relative or absolute positional information for each imaging element. For example, the output of the imaging apparatus 70 for a particular image element 74 may be in the format X, Y, T where X equals X-position, Y equals Y-position, and T equals temperature.

Nonlimiting examples of suitable imaging apparatus 70 include photodiode arrays, photomultiplier tube ("PMT") arrays, digital cameras (e.g. CMOS or CCD), or optical coherence tomography ("OCT") apparatus. Optical coherence tomography ("OCT") is a known technique which is capable of providing Z-axis information as well as X and Y information (e.g., "3-D information"). In the illustrated example, the imaging apparatus 70 is depicted as a digital camera placed so that its field-of-view encompasses the melt pool 52.

The imaging apparatus 70 may be statically mounted or it may be mounted so that it can be driven by one or more actuators (not shown) in order to track the position of the melt pool 52.

The imaging apparatus 70 may be configured to acquire a series of static images at regular intervals, or it may operate continuously. The melt pool images 72 create a base dataset on which analysis may be performed.

The process of analyzing the melt pool 52 may be carried out using appropriately-programmed software running on one or more processors embodied in a device such as a microcomputer (not shown). Such software may be implemented on a device separate from the machine 10, or it may be incorporated into the machine 10, for example the software may be run by the controller described below.

Continuing to refer to FIG. 3, a portion of the powder bed P is shown with a melt pool 52 superimposed thereon. The melt pool 52 is shown having a peripheral melt pool boundary 76 or closed perimeter, identified by the shaded image elements 74, which is a demarcation between the interior of the melt pool 52 and the exterior of the melt pool 52.

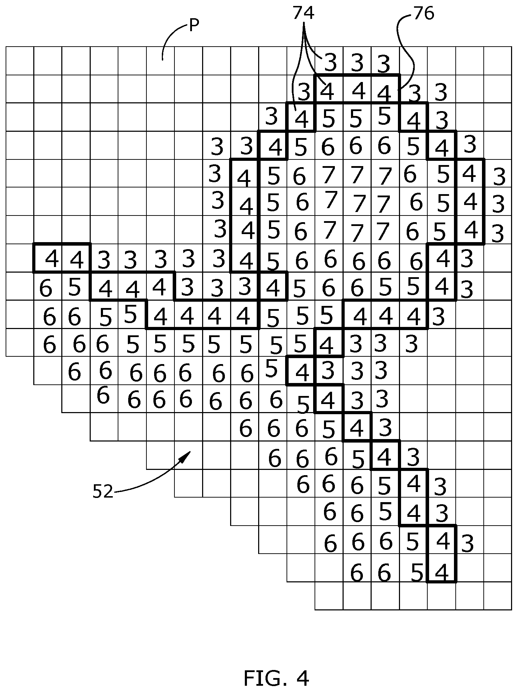

As an example, FIG. 4 shows a simplified representation of a portion of the melt pool 52 in which each image element 74 is assigned a scalar value corresponding to sensed data. For example, temperature data might be represented on a 0-10 scale.

Once the melt pool 52 is digitally imaged, it may be evaluated using one or more machine learning algorithms. In general, "machine learning" refers to software techniques that allow computer systems to improve performance at a task without explicit programming. A machine learning algorithm may be implemented as an artificial neural network. The machine learning analysis and evaluation may be carried out on an image including the melt pool 52 plus additional surrounding area of the powder bed, solely on the melt pool 52 including melt pool boundary 76, solely on the melt pool boundary 76, solely on the portion of the melt pool 52 lying within the melt pool boundary 76, or some combination thereof

The machine learning algorithm is operable to classify images as belonging to a defined group, by identifying common characteristics in the images. The algorithm can perform a classification task based on training (i.e. a "supervised" mode).

In the context of an additive manufacturing process, the classification task may would consist of classifying each melt pool image 72 as either "acceptable" (i.e., process unfaulted) or "unacceptable" (i.e., process faulted).

The machine learning algorithm may be trained by inputting to it images which are known to be acceptable, known to be unacceptable, or a combination thereof. These serve as a basis for comparison. In a supervised training mode, the supervision could facilitate root cause analysis by training with specific categories of known unacceptable images, organized by the cause of the process failure. As one illustrative example, the algorithm could be provided with known unacceptable images produced by a powder layer that is too thick. The algorithm would thus learn from this image not only that the image is unacceptable, but that it is unacceptable because the powder layer was too thick.

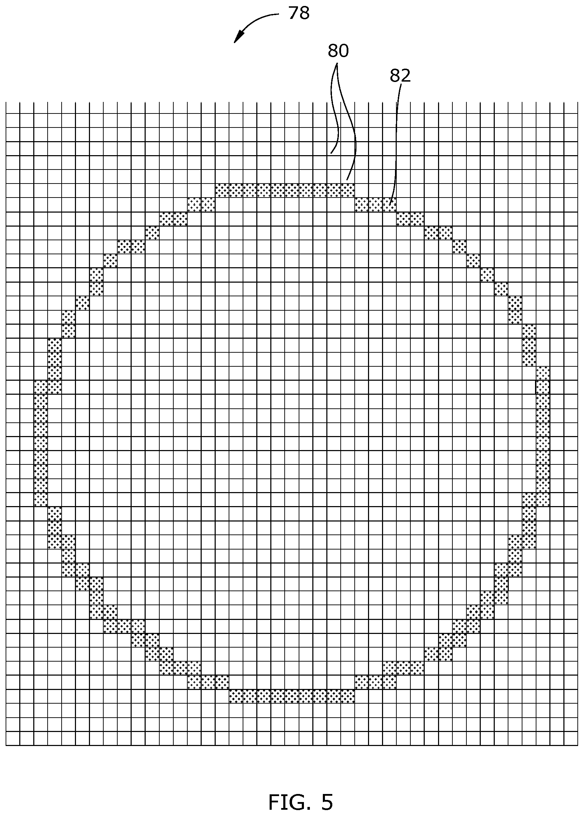

For example, FIG. 5 depicts a model of an idealized melt pool template 78. The melt pool template 78 is made up of image elements 80 and includes a predetermined template boundary 82 which is representative of a known good process (i.e., unfaulted). In this example the template boundary 82 is approximately circular While no specific shape is necessarily required for an acceptable process, it is generally true that the more complex shape of FIG. 3, being more complex and irregular, is more likely to be unacceptable and indicative of a process problem, than a less complex shape. A shape similar to that of FIG. 3 could be used as a known unacceptable image.

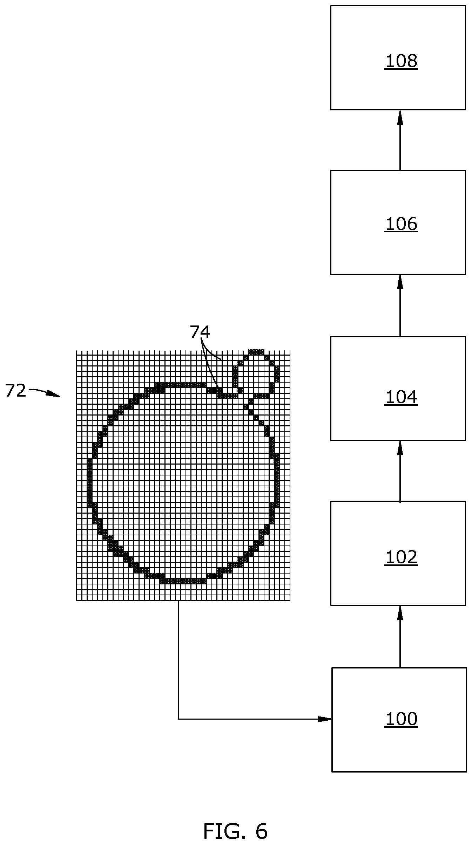

One category of machine learning algorithm is "deep learning". Deep learning algorithms use a cascade of multiple layers to extract images features. Each successive layer uses the output from the previous layer as input. Such algorithms can learn or be trained in a "supervised" mode, comprising a classification task as defined above, or an "unsupervised" mode, comprising a pattern analysis task. FIG. 6 shows an example where a melt pool image 72 is successively broken down into layers. The first layer 100 comprises input image elements 74 (e.g. pixels). The pixels combine to form a layer 102 of edges. The edges combine to form another layer 104 of corners and contours. The corners and contours combine to form a layer 106 of object parts. The object parts ultimately combine to form an output (i.e. object identity) 108. For example, the algorithm may start with raw image elements 74 and can identify the melt pool 52 therefrom.

The melt pool quality determination may be repeated for each individual melt pool image 72 as they are acquired.

Other methods may be used beyond a simple classification of the melt pool image 72 In one example, the classification for each melt pool image 72 may be used as an input into a single or multivariate statistical process control ("SPC") process. Nonlimiting examples of known SPC methods include principal component analysis ("PCA"), independent component analysis ("ICA"), and kernel PCA.

The process may include creating populations of unfaulted and faulted process states based on the machine learning classification. Specifically, each melt pool image 72 would be assigned to either the unfaulted or faulted population as it is classified.

A melt pool monitoring process may be incorporated into the build process described above. Generally stated, the monitoring process includes using the imaging apparatus 70 described above to acquire melt pool images 72, evaluating the melt pool 52 using one or more of the machine learning techniques described above, and then adjusting one or more process parameters as necessary. As used herein, "process parameters" can refer to any controllable aspect of the machine 10.

The monitoring process may include taking a discrete action in response to the melt pool classification indicating a process fault, such as providing a visual or audible alarm to a local or remote operator.

The monitoring process may include stopping the build process in response to melt pool classification indicating a process fault. This is another example of a discrete action.

The monitoring process may include real-time control of one or more process parameters, such as directed energy source power level or beam scan velocity, using a method such as: statistical process control, feedforward control, feedback control using proportional, proportional-integral, or proportional-integral-derivative control logic, neural network control algorithms, or fuzzy logic control algorithms.

The monitoring method may include monitoring of the condition or "health" of the machine 10. Melt pool measurements may be measured and stored during several build cycles and compared between cycles. For example, a change in melt pool consistency between cycles could indicate machine miscalibration or degradation. Corrective action could take the form of machine maintenance or repairs, or modification of process parameters in subsequent builds to compensate for machine degradation.

The operation of the apparatus described above including the machine 10 and imaging apparatus 70 may be controlled, for example, by software running on one or more processors embodied in one or more devices such as a programmable logic controller ("PLC") or a microcomputer (not shown). Such processors may be coupled to the sensors and operating components, for example, through wired or wireless connections. The same processor or processors may be used to retrieve and analyze sensor data, for statistical analysis, and for feedback control. FIG. 1 illustrates schematically a controller 85 which includes one or more processors operable to control the machine 10.

The method described herein has several advantages over the prior art. In particular, direct analysis of the melt pool is a key indicator of the stability of the manufacturing process and ultimately of the conformity of workpieces to geometric, metallurgical and mechanical requirements.

Establishing melt pool stability using the method described herein can also reduce machine setup costs through validation of the process to a known good standard, reduce existing material development for additive, reduce application development and be an enabler for novel alloy for additive development.

The foregoing has described an apparatus and method for melt pool monitoring in a manufacturing process. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying claims, abstract and drawings), or to any novel one, or any novel combination, of the steps of any method or process so disclosed.

Various aspects and embodiments of the invention are defined by the following clauses:
1. A method of controlling an additive manufacturing process in which a directed energy source is used to selectively melt material to form a workpiece, forming a melt pool in the process of melting, the method comprising:
   using an imaging apparatus to generate an image of the melt pool comprising an array of individual image elements, the image including a measurement of at least one physical property for each of the individual image elements;
   using a software machine learning algorithm to classify each image as acceptable or unacceptable; and
   controlling at least one aspect of the additive manufacturing process with reference to the image classification.
2. The method of clause 1 wherein the machine learning algorithm is a deep learning algorithm.
3. The method of clause 2 wherein the machine learning algorithm operates using unsupervised training.
4. The method of clause 1 wherein the machine learning algorithm is trained using images of melt pools known to be acceptable.
5. The method of clause 2 wherein the machine learning algorithm is trained using images of melt pools known to be unacceptable.
6. The method of clause 1, further comprising evaluating the image classification for indications of a process fault.
7. The method of clause 1, wherein the image classification is used as an input into a statistical process control method for the additive manufacturing process.
8. The method of clause 1, wherein the image classification is used to create populations of unfaulted and faulted process states.
9. The method of clause 6 wherein the step of controlling includes taking a discrete action in response to the image classification indicating a process fault.
10. The method of clause 9 wherein the discrete action is stopping the additive manufacturing process.
11. The method of clause 9 wherein the discrete action is providing a visual or audible alarm to a local or remote operator.
12. The method of clause 1 wherein the step of controlling includes changing at least one process parameter of the additive manufacturing process.
13. The method of clause 14 wherein the controlled process parameter includes at least one of: directed energy source power level and beam scan velocity.
14. A method of making a workpiece, comprising:
   depositing a material in a build chamber;
   directing a build beam from a directed energy source to selectively fuse the material in a pattern corresponding to a cross-sectional layer of the workpiece, wherein a melt pool is formed by the directed energy source;
   using an imaging apparatus to generate an image of the melt pool comprising an array of individual image elements, the image including a measurement of at least one physical property for each of the individual image elements;
   using a software machine learning algorithm to classify each image as acceptable or unacceptable; and
   controlling at least one aspect of making the workpiece with reference to the image classification.
15. The method of clause 14, further comprising evaluating the image classification for indications of a process fault.
16. The method of clause 14, wherein the image classification is used as an input into a statistical process control method for the additive manufacturing process.
17. The method of clause 14, wherein the image classification is used to create populations of unfaulted and faulted process states.
18. The method of clause 1, wherein the classification is based solely on image elements contained in a melt pool boundary of the image.
19. The method of clause 1, where the classification is based solely on image elements contained in an area bounded by a melt pool boundary of the image.

## Claims

1. A method of controlling an additive manufacturing process in which a directed energy source (24) is used to selectively melt material to form a workpiece, forming a melt pool (52) in the process of melting, the method comprising:
using an imaging apparatus to generate an image (72) of the melt pool (52) comprising an array of individual image elements (74), the image (72) including a measurement of at least one physical property for each of the individual image elements (74);
using a software machine learning algorithm to classify each image (72) as acceptable or unacceptable; and
controlling at least one aspect of the additive manufacturing process with reference to the image classification.

2. The method of claim 1 wherein the machine learning algorithm is a deep learning algorithm.

3. The method of claim 2 wherein the machine learning algorithm operates using unsupervised training.

4. The method of claim 1 wherein the machine learning algorithm is trained using images (72) of melt pools (52) known to be acceptable.

5. The method of claim 2 wherein the machine learning algorithm is trained using images (72) of melt pools (52) known to be unacceptable.

6. The method of claim 1, further comprising evaluating the image classification for indications of a process fault.

7. The method of claim 1, wherein the image classification is used as an input into a statistical process control method for the additive manufacturing process.

8. The method of claim 1, wherein the image classification is used to create populations of unfaulted and faulted process states.

9. The method of claim 6 wherein the step of controlling includes taking a discrete action in response to the image classification indicating a process fault.

10. The method of claim 9 wherein the discrete action is stopping the additive manufacturing process.

11. The method of claim 1 wherein the step of controlling includes changing at least one process parameter of the additive manufacturing process.

12. A method of making a workpiece, comprising:
depositing a material in a build chamber;
directing a build beam from a directed energy source (24) to selectively fuse the material in a pattern corresponding to a cross-sectional layer of the workpiece, wherein a melt pool (52) is formed by the directed energy source (24);
using an imaging apparatus to generate an image (72) of the melt pool (52) comprising an array of individual image elements (74), the image (72) including a measurement of at least one physical property for each of the individual image elements (74);
using a software machine learning algorithm to classify each image (72) as acceptable or unacceptable; and
controlling at least one aspect of making the workpiece with reference to the image classification.

13. The method of claim 12, further comprising evaluating the image classification for indications of a process fault.

14. The method of any preceding claim, wherein the classification is based solely on image elements (74) contained in a melt pool boundary of the image (72).

15. The method of any preceding claim, where the classification is based solely on image elements (74) contained in an area bounded by a melt pool boundary of the image (72).
